# EUROPEAN PATENT APPLICATION

(11) **EP 3 779 509 A1**
(43) Date of publication of application: **17.02.2021**
(21) Application number: 19778110.7
(22) Date of filing: 26.02.2019
(51) Int. Cl.: G01S 15/62, G01S 15/93, G05D 1/02

(54) **OBSTACLE DETECTION SYSTEM FOR WORK VEHICLE**

(30) Priority: 29.03.2018 JP 2018064514
(71) Applicant: Yanmar Power Technology Co., Ltd., Osaka-shi Osaka 530-0013 (JP)
(72) Inventor: IWASE, Takuya, Osaka-shi, Osaka 530-0013 (JP); YOKOYAMA, Kazuhisa, Osaka-shi, Osaka 530-0013 (JP); SUGITA, Shiro, Osaka-shi, Osaka 530-0013 (JP)
(74) Representative: Poindron, Cyrille
(86) International application number: PCT/JP2019/007166
(87) International publication number: WO 2019/187883

(57) **Abstract**

Provided is an obstacle detection system for a work vehicle, with which the reduction of costs or labor required for preparatory work can be achieved. In an obstacle detection system for a work vehicle, three left-side and three right-side ultrasonic sensors 103A-103C, 104A-104C are disposed on the left and right sides of a work vehicle 1, respectively, and the measurement ranges Na-Nc thereof are continuous in the front and rear direction. In addition, a control unit 105 for distance measurement performs: position detection processing for detecting the position of an object with respect to the vehicle in the front and rear direction on the basis of a distance measurement operation of the ultrasonic sensors 103A-103C, 104A-104C having the continuous measurement ranges Na-Nc; and displacement detection processing for detecting the movement of the object in the front and rear direction on the basis of the distance measurement operation sequence of the ultrasonic sensors 103A-103C, 104A-104C having the continuous measurement ranges Na-Nc

## Description

### TECHNICAL FIELD

The present invention relates to an obstacle detection system for a work vehicle that avoids collision of a work vehicle, such as a tractor, with an obstacle present in a work area.

### BACKGROUND ART

There is a known obstacle detection system provided for a work vehicle, such as agricultural machinery that includes a stereo camera (stereo camera device) for capturing images of the front of the work vehicle disposed, for example, in the front of the work vehicle (agricultural machinery), and a pair of left and right ultrasonic sonar devices having measurement ranges in the front of the work vehicle. The obstacle detection system uses the stereo camera to detect an obstacle in the travel direction of the work vehicle and to detect the distance to and size of an obstacle, and uses the ultrasonic sonar device to measure the distance to an obstacle in a blind spot of the stereo camera (refer to, for example, Patent Literature 1).

### CITATION LIST

### Patent Literature

Patent Literature 1: PCT International Publication No. 2016/009688

### DISCLOSURE OF INVENTION

### PROBLEMS TO BE SOLVED BY THE INVENTION

In other words, the invention described in Patent Literature 1 includes, at the front of a work vehicle, a stereo camera suitable for detecting the position of an obstacle relative to the vehicle and a pair of left and right ultrasonic sonar devices that measure the distance to an obstacle entering the vicinity of the work vehicle in the blind spot of the stereo camera. When the stereo camera or the ultrasonic sonar devices detect an obstacle present in the travel direction (front) of the work vehicle, the work vehicle avoids colliding with the obstacle in the travel direction (front) of the work vehicle. Therefore, in the invention described in Patent Literature 1, in order to avoid a collision of an obstacle with any side portion of the work vehicle on the front, rear, left, and right, it is necessary to place an ultrasonic sonar device and an expensive stereo camera on each of the front, rear, left, and right side portions of the work vehicle. Also, to detect obstacles with a stereo camera, it is necessary to preliminarily perform a learning process of learning the shape of many obstacles that are to be subjects of the detection. As a result, the construction of an obstacle detection system that avoids collision of a work vehicle with an obstacle leads to high costs and an increase in time and effort required for preliminary work including the learning process.

In view of this situation, a main object of the present invention is to provide an obstacle detection system for a work vehicle that reduces costs and the effort required for preliminary work.

### MEANS FOR SOLVING THE PROBLEMS

A first characteristic configuration of the present invention is an obstacle detection system for a work vehicle including:
a sensor unit including three or more ultrasonic sensors, the sensor unit being disposed on a side portion being one of front, rear, left and right in the work vehicle; and
a control unit for ranging that measures a distance to an object that has entered measurement ranges of the ultrasonic sensors based on distance measurement operations of the ultrasonic sensors,
each of the ultrasonic sensors is disposed on the side portion in a positional relation in which the measurement ranges of at least two of the ultrasonic sensors are continuous in a direction along the side portion, and
the control unit performs a position detection process and a displacement detection process, the position detection process detects a position of the object relative to a vehicle body in the direction along the side portion based on the distance measurement operations of the ultrasonic sensors whose measurement ranges are continuous, the displacement detection process detects displacement of the object in the direction along the side portion based on a sequence of the distance measurement operations of the ultrasonic sensors whose measurement ranges are continuous.

According to this configuration, for example, in the case where the sensor unit is disposed on the right side portion of the work vehicle, at least two ultrasonic sensors are disposed side by side in the vehicle front-rear direction on the right side portion of the work vehicle.

In such a case, for example, when an object enters the measurement range of the first ultrasonic sensor, which has a measurement range of the front region of the right outer front side of the vehicle body, the ultrasonic waves emitted from the first ultrasonic sensor hit the object and bounce back to the first ultrasonic sensor. This causes the first ultrasonic sensor to perform a distance measurement operation in which it receives reflected waves in addition to transmitting ultrasonic waves. The control unit detects the presence of an object in the front region on the outer right side of the vehicle body, which is the measurement range, of the first ultrasonic sensor operated for ranging, by the above-described position detection process, and measures the distance from the first ultrasonic sensor to the object on the basis of the time required from the transmission of the ultrasonic waves to reception at the first ultrasonic sensor. As a result, the control unit can detect, on the basis of the distance measurement operation of the first ultrasonic sensor, an object present at a measurement distance from the first ultrasonic sensor in the front region on the outer right side of the vehicle body.

Similarly, for example, when an object enters the measurement range of the second ultrasonic sensor, which has a measurement range that is the rear region on the outer right side of the vehicle body, the second ultrasonic sensor performs a distance measurement operation, so that the control unit can detect, on the basis of the distance measurement operation of the second ultrasonic sensor, the presence of an object at a position that is a measurement distance from the second ultrasonic sensor in the rear region on the outer right side of the vehicle body.

For example, when an object enters the measurement range of the first ultrasonic sensor and then enters the measurement range of the second ultrasonic sensor, the first ultrasonic sensor performs the distance measurement operation and then the second ultrasonic sensor performs the distance measurement operation, so that the control unit can detect that the object has been displaced from the front region on the outer right side of the vehicle to the rear region by the displacement detection process described above.

Similarly, for example, when an object enters the measurement range of the second ultrasonic sensor and then enters the measurement range of the first ultrasonic sensor, the second ultrasonic sensor performs the distance measurement operation and then the first ultrasonic sensor performs the distance measurement operation, so that the control unit can detect that the object has been displaced from the rear region on the outer right side of the vehicle body to the front region by the displacement detection process described above.

When the object is out of the measurement range of the sensor unit, each ultrasonic sensor ceases to perform the distance measurement operation, so that the control unit can detect that the object is no longer present in the measurement range of the sensor unit.

Obviously, the control unit measures the distance to the object on the basis of the distance measurement operation of the first or second ultrasonic sensor, so that when an object located in the measurement range of the first or second ultrasonic sensor is displaced in the measurement range in the perspective direction relative to the right side portion of the vehicle body, the control unit can detect the displacement of the object in the perspective direction relative to the right side portion of the vehicle body on the basis of the measurement distance that changes accordingly.

When the control unit detects that an object has been displaced between the front region and the rear region in the front-rear direction on the outer right side of the vehicle body by the above-described displacement detection process, the electronic control unit for ranging can detect the displacement of the object in the perspective direction relative to the right side portion of the vehicle, on the basis of the difference in the measurement distance obtained accordingly.

In other words, by disposing a sensor unit including a plurality of ultrasonic sensors, which are less expensive than stereo cameras, and LiDAR sensors used in place of stereo cameras on at least a side portion being one of front, rear, left, and right of the work vehicle, it is possible to detect the position and displacement of an object relative to the vehicle body in the vicinity of the side in the direction along the side portion and the perspective direction relative to the side portion, without stereo cameras, LiDAR sensors, or the like, for capturing images of the vicinity of the side portion.

As a result, it is possible to reduce the cost and the labor required for preliminary work in building the obstacle detection system for a work vehicle by reducing the number of expensive stereo cameras, LiDAR sensors, and other equipment installed.

In a second characteristic configuration,
the sensor unit includes four or more of the ultrasonic sensors,
the ultrasonic sensors are vertically and horizontally aligned on the side portion in a positional relationship in which the measurement ranges are continuous in both the direction along the side portion and the perspective direction, and
the control unit detects, in the position detection process, the position of the object relative to the vehicle body in a measurement range of the sensor unit based on the distance measurement operations of the ultrasonic sensors whose measurement ranges are continuous, and, in the displacement detection process, detects the movement of the object in the measurement range of the sensor unit based on the sequence of the distance measurement operations of the ultrasonic sensors whose measurement ranges are continuous.

In the case where the work vehicle includes ultrasonic sensors, especially, a work vehicle such as an agricultural work machine that often runs in a field where the soil is mud, it is necessary to disposed the ultrasonic sensors at relatively high positions in order to prevent the adhesion of mud to the ultrasonic sensors. In this way, when the ultrasonic sensors are disposed at relatively high positions on the vehicle body, the higher the ultrasonic sensor position, the larger the depression angle of the ultrasonic sensor needs to be in order to reduce the blind stops of the ultrasonic sensor near the vehicle body. When the depression angle is increased, it is necessary to limit the measurement ranges of the ultrasonic sensors so that the ultrasonic sensors do not detect the ground as an object and measure the distance. Therefore, the measurement ranges of the ultrasonic sensors are limited to a short distance from the work vehicle.

According to this configuration obtained in view of such a situation, for example, in the case where the sensor unit is disposed on the right side portion of the work vehicle, at least four ultrasonic sensors are a are vertically and horizontally aligned on the right side portion of the work vehicle in a positional relationship.

In such a case, for example, when an object enters the measurement range of the first ultrasonic sensor, which has a measurement range of the front outer region of the right outer front side of the vehicle body, the ultrasonic waves emitted from the first ultrasonic sensor hit the object and bounce back to the first ultrasonic sensor. This causes the first ultrasonic sensor to perform a distance measurement operation in which it receives reflected waves in addition to transmitting ultrasonic waves. The control unit detects the presence of an object in the front outer region on the outer right side of the vehicle body, which is the measurement range, of the first ultrasonic sensor operated for ranging, by the above-described position detection process, and measures the distance from the first ultrasonic sensor to the object on the basis of the time required from the transmission of the ultrasonic waves to reception at the first ultrasonic sensor. As a result, the control unit can detect, on the basis of the distance measurement operation of the first ultrasonic sensor, an object present at a measurement distance from the first ultrasonic sensor in the front outer region on the outer right side of the vehicle body.

Similarly, for example, when an object enters the measurement range of the second ultrasonic sensor, which has a measurement range that is the rear outer region on the outer right side of the vehicle body, the second ultrasonic sensor performs a distance measurement operation, so that the control unit can detect, on the basis of the distance measurement operation of the second ultrasonic sensor, the presence of an object at a position that is a measurement distance from the second ultrasonic sensor in the rear outer region on the outer right side of the vehicle body.

Similarly, for example, when an object enters the measurement range of the third ultrasonic sensor, which has a measurement range of the front inner region on the outer right side of the vehicle body, the third ultrasonic sensor performs a distance measurement operation, so that the electronic control unit can detect, on the basis of the distance measurement operation of the third ultrasonic sensor, the presence of an object at a position that is a measurement distance from the third ultrasonic sensor in the front inner region on the outer right side of the vehicle body.

Similarly, for example, when an object enters the measurement range of the fourth ultrasonic sensor, which has a measurement range that is the rear inner region on the outer right side of the vehicle body, the fourth ultrasonic sensor performs a distance measurement operation, so that the control unit can detect, on the basis of the distance measurement operation of the fourth ultrasonic sensor, the presence of an object at a position that is a measurement distance from the fourth ultrasonic sensor in the rear inner region on the outer right side of the vehicle body.

For example, when an object enters the measurement range of the first ultrasonic sensor and then enters the measurement range of the second ultrasonic sensor, the first ultrasonic sensor performs the distance measurement operation and then the second ultrasonic sensor performs the distance measurement operation, so that the control unit can detect that the object has been displaced from the front outer region on the outer right side of the vehicle body to the rear outer region by the displacement detection process described above.

In other words, when an object enters the measurement range of one of the ultrasonic sensors and then enters the measurement range of another ultrasonic sensor, the control unit can detect that the object has been displaced from a predetermined region on the outer right side of the vehicle body corresponding to the measurement range, before moving to another predetermined region corresponding to the measurement range after moving, by the displacement detection process described above.

When the object is out of the measurement range of the sensor unit, each ultrasonic sensor ceases to perform the distance measurement operation, so that the control unit can detect that the object is no longer present in the measurement range of the sensor unit.

Obviously, the control unit measures the distance to the object on the basis of the distance measurement operation of one of the ultrasonic sensors, so that when an object located in the measurement range of one of the ultrasonic sensors is displaced in the measurement range in the perspective direction relative to the right side portion of the vehicle body, the control unit can detect the displacement of the object in the perspective direction relative to the right side portion of the vehicle body on the basis of the measurement distance that changes accordingly.

When the control unit detects that an object has been displaced between any two predetermined regions in the front-rear direction on the outer right side of the vehicle body by the above-described displacement detection process, the control unit for ranging can detect the displacement of the object in the perspective direction relative to the right side portion of the vehicle, on the basis of the difference in the measurement distance obtained accordingly.

This allows each ultrasonic sensor to be disposed high enough to prevent mud from adhering to them, but without causing a problem of each ultrasonic sensor measuring the distance to the ground, and the measurement range of the sensor unit can be extended in the perspective direction relative to the work vehicle with fewer blind spots in the vicinity of the vehicle body. The control unit can satisfactorily detect the position and displacement of the object relative to the vehicle boy in a wider region outward of one side of the work vehicle.

As a result, it is possible to secure a wide measurement range suitable for an obstacle detection system for a work vehicle and to satisfactorily perform object detection, while reducing costs and labor required for pre-work.

A third characteristic configuration includes:
a collision avoidance control unit that performs collision avoidance control for avoiding a collision between the work vehicle and the object based on information from the control unit,
wherein the collision avoidance control unit controls running of the work vehicle in the collision avoidance control.

According to this configuration, for example, when the control unit detects the presence of an object in a far region on the basis of a distance measurement operation of an ultrasonic sensor having a measurement range in a region far from the work vehicle while the work vehicle is running at a set speed for work, in the collision avoidance control, a deceleration process is performed to drive the work vehicle at a speed lower than the set speed based on the detection information. Then, when the control unit detects the presence of an object in a near area on the basis of a distance measurement operation of the ultrasonic sensor having a measurement range in the region near the work vehicle, in the collision avoidance control, a stop process is performed to stop the work vehicle is performed. In this way, it is possible to avoid a collision of the work vehicle with an object.

For example, when the control unit no longer detects the presence of an object in a region corresponding to the measurement range of the sensor units because the ultrasonic sensors ceased distance measurement operations while the work vehicle is running at a lower speed than a set speed, under collision avoidance control, an acceleration process can be performed to increase the speed of the work vehicle to the set speed based on the detection information. In this way, it is possible to avoid a decrease in work efficiency caused by continuous running at low speeds while the work vehicle is not likely to be hit by an object.

As a result, it is possible to construct an obstacle detection system for a work vehicle that can avoid a collision of the work vehicle with an object and a reduction in work efficiency while reducing costs and the effort required for preliminary work.

### BRIEF DESCRIPTION OF DRAWINGS

FIG. 1 is a diagram illustrating the schematic configuration of an automatic running system.
FIG. 2 is a block diagram illustrating the schematic configuration of an automatic running system.
FIG. 3 is a diagram illustrating an example of a target travel route.
FIG. 4 is a diagram illustrating a measurement range of each LiDAR sensor and a measurement range of each ultrasonic sensor in side view.
FIG. 5 is a diagram illustrating the measurement range of each LiDAR sensor and the measurement range of each ultrasonic sensor in plan view.
FIG. 6 is a block diagram illustrating a schematic configuration of a sonar system.
FIG. 7 is a perspective view of the arrangement and configuration of a sensor unit.
FIG. 8 is a flowchart illustrating control operation of a control logic unit for distance measurement in a position/displacement detection process.
FIG. 9 is a flowchart illustrating control operation of a collision avoidance control unit under collision avoidance control.
FIG. 10 is a plan view of another embodiment in which three ultrasonic sensors are disposed so that their measurement ranges overlap.
FIG. 11 is a perspective view of another embodiment in which four ultrasonic sensors are disposed vertically and horizontally in side view so that the measurement ranges are aligned vertically and horizontally in plan view.
FIG. 12 is a plan view of another embodiment in which four ultrasonic sensors are disposed horizontally and vertically so that their measurement ranges are aligned vertically and horizontally in plan view.
FIG. 13 is a front view of another embodiment in which four ultrasonic sensors are disposed vertically and horizontally so that their measurement ranges are aligned vertically and horizontally in plan view.
FIG. 14 is a plan view of another embodiment in which three ultrasonic sensors are disposed in such a way that the measurement ranges are continuous with equal spacing in the front-rear direction.

### DESCRIPTION OF EMBODIMENTS

As an example of an embodiment of the present invention, an embodiment in which an obstacle detection system for a work vehicle according to the present invention is applied to a tractor, which is an example of a work vehicle, will now be described with reference to the drawings.

The obstacle detection system for a work vehicle according to the present invention can be applied to passenger work vehicles besides tractors, such as riding mowers, riding rice transplanters, combines, carriers, snowplows, wheel loaders, and unmanned work vehicles, such as unmanned mowers.

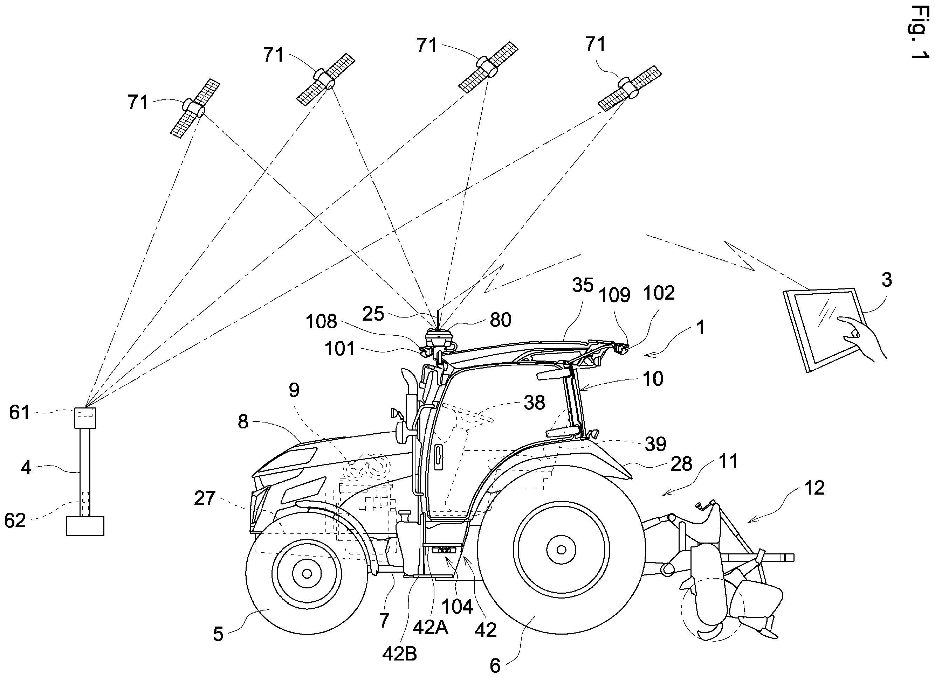

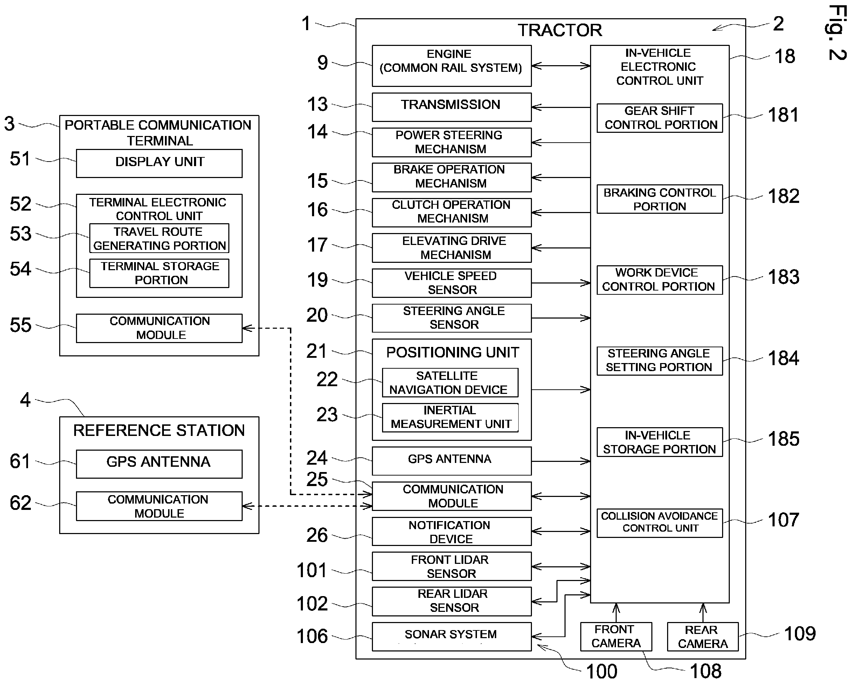

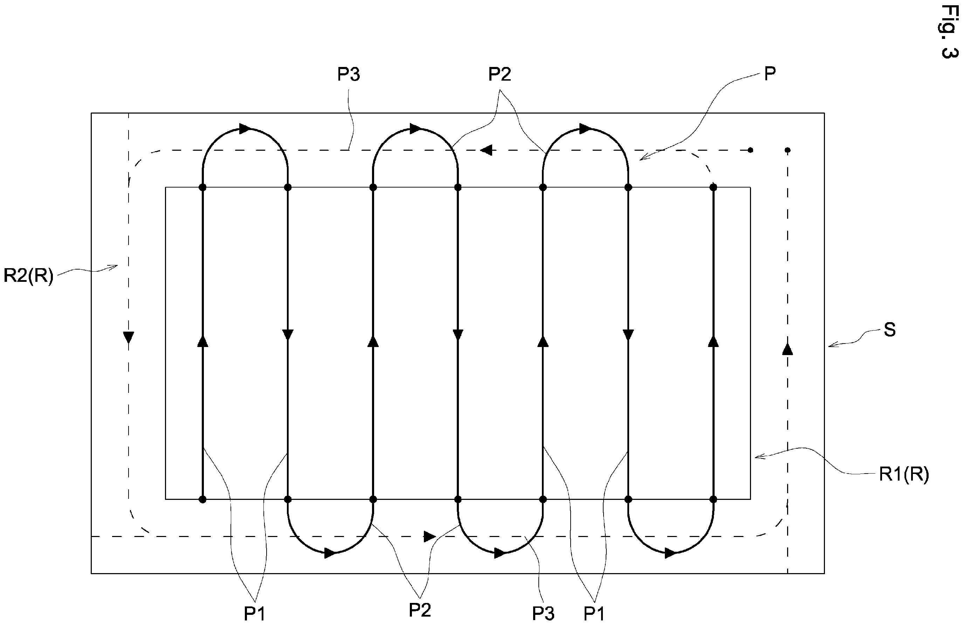

As illustrated in FIGs. 1 and 2, a tractor 1 exemplified in the present embodiment is configured to run automatically in a field S (see FIG. 3) or the like, which is an example of a work area, by an automatic running system for work vehicles. The automatic running system includes an automatic running unit 2 mounted on the tractor 1 and a portable communication terminal 3 set up to communicate with the automatic running unit 2. The portable communication terminal 3 can employ a tablet-type personal computer, a smartphone, or the like including a touch-operable display unit 51 (e.g., a liquid crystal panel) or the like.

The tractor 1 includes a running body 7 including left and right front wheels 5 serving as steering wheels that can be driven and left and right rear wheels 6 that can be driven. A front frame 27 and a hood 8 are disposed on the front portion of the running body 7. An electronically controlled diesel engine (hereinafter referred to as the engine) 9, provided with a common rail system, is disposed inside the hood 8. A cabin 10 that forms a boarding-type driving section and left and right rear fenders 28 are disposed on the running body 7 on the rear side of the hood 8.

A rotary cultivator, which is an example of a work device 12, is coupled to the rear portion of the running body 7 via a three-point link mechanism 11 in such a manner that the rotary cultivator can be raised, lowered, and rolled. Thus, the tractor 1 is designed to enable rotary tilling. At the rear portion of the tractor 1, a work device 12, such as a plow, a seeding device, or a spraying device, can be coupled, in place of the rotary cultivator.

As illustrated in FIG. 2, the tractor 1 is provided with, for example, an electronically controlled transmission 13 that shifts power from the engine 9; a fully hydraulic power steering mechanism 14 that steers the left and right front wheels 5; left and right side brakes (not illustrated) that apply brakes on the left and right rear wheels 6; an electronically controlled brake operation mechanism 15 that enables a hydraulic operation of the left and right side brakes; a working clutch (not illustrated) that intermittently transmits power to the work device 12 of the rotary cultivator; an electronically controlled clutch operation mechanism 16 which enables a hydraulic operation of the working clutch; an electrohydraulically controlled elevating drive mechanism 17 that drives the work device 12 of the rotary cultivator to move up and down; an in-vehicle electronic control unit 18 that includes various control programs related to automatic running or the like of the tractor 1; a vehicle speed sensor 19 that detects the vehicle speed of the tractor 1; a steering angle sensor 20 that detects the steering angle of the front wheels 5; and a positioning unit 21 that measures the current position and the current orientation of the tractor 1.

Alternatively, for the engine 9, an electronically controlled gasoline engine equipped with an electronic governor may be adopted. For the transmission 13, a hydromechanical continuously variable transmission (HMT), a hydrostatic continuously variable transmission (HST), or a belt-type continuously variable transmission, etc., can be employed. For the power steering mechanism 14, an electrically operated power steering mechanism 14 equipped with an electric motor, for example, may be employed.

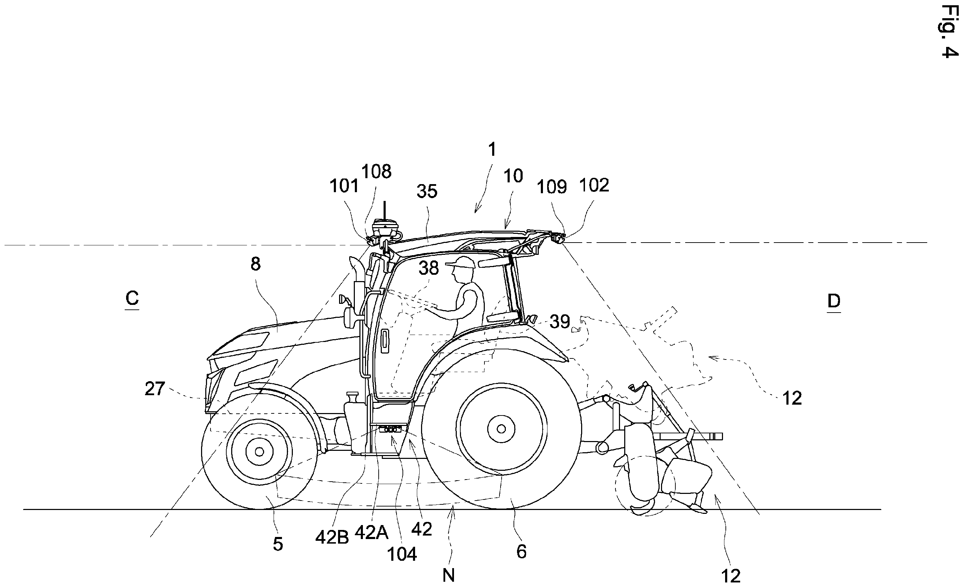

As illustrated in FIGs. 1 and 4, a steering wheel 38 that enables manual steering of the left and right front wheels 5 via the power steering mechanism 14 (see FIG. 2), a driver's seat 39 for a passenger, a touch panel type display unit, various operation tools, etc., are provided inside the cabin 10. Both lateral side portions of the forward side portion of the cabin 10 are provided with footboards 41 and 42 serving as a boarding section of the cabin 10 (driver's seat 39).

As illustrated in FIG. 2, the in-vehicle electronic control unit 18 includes a gear shift control portion 181 that controls the actuation of the transmission 13; a braking control portion 182 that controls the actuation of the left and right side brakes; a work device control portion 183 that controls the actuation of the work device 12 of the rotary cultivator; a steering angle setting portion 184 that sets a target steering angle of the left and right front wheels 5 at the time of automatic running, and outputs the same to the power steering mechanism 14; and a nonvolatile in-vehicle storage portion 185 that stores a preliminarily set target travel route P for automatic running (for example, see FIG. 3).

As illustrated in FIG. 2, the positioning unit 21 includes a satellite navigation device 22, that measures the current position and the current orientation of the tractor 1 by using the Global Positioning System (GPS), which is an example of a navigation satellite system (NSS); and an inertial measurement unit (IMU) 23 that includes a three-axis gyroscope, a three-direction acceleration sensor, etc., and measures the attitude, the orientation, and the like, of the tractor 1. A positioning method using the GPS includes a DGPS (differential GPS: relative positioning method) and an RTK-GPS (real-time kinematic GPS: interference positioning method). In the present embodiment, an RTK-GPS that is suitable for measuring the position of a movable body is employed. Accordingly, a reference station 4 that enables positioning by the RTK-GPS is installed at a known location in the periphery of the field, as illustrated in FIGs. 1 and 2.

As illustrated in FIG. 2, the tractor 1 and the reference station 4 respectively include GPS antennas 24 and 61 that receive radio waves transmitted from a GPS satellite 71 (see FIG. 1), and communication modules 25 and 62 that enable wireless communication of various data, including positioning data, between the tractor 1 and the reference station 4. This enables the satellite navigation device 22 to measure the current position and current orientation of the tractor 1 with a high degree of accuracy on the basis of the positioning data obtained by the GPS antenna 24 on the tractor side receiving radio waves from the GPS satellite 71 and the positioning data obtained by the GPS antenna 61 on the base station side receiving radio waves from the GPS satellite 71. Also, as the positioning unit 21 is provided with the satellite navigation device 22 and the inertial measurement unit 23, the current position, the current orientation, and an attitude angle (yaw angle, roll angle, pitch angle) of the tractor 1 can be measured with high accuracy.

The GPS antenna 24, the communication module 25, and the inertial measurement unit 23 on the tractor 1 are housed in an antenna unit 80, as illustrated in FIG. 1. The antenna unit 80 is disposed at the upper position on the front side of the cabin10.

As illustrated in FIG. 2, the portable communication terminal 3 includes a terminal electronic control unit 52 including various control programs that control the operation of the display unit 51 and the like, and a communication module 55 that enables wireless communication of various data, including positioning data, with the communication module 25 on the tractor side. The terminal electronic control unit 52 includes a travel route generating portion 53 that generates the target travel route P for travel guidance (for example, see FIG. 3) for making the tractor 1 run automatically, and a nonvolatile terminal storage portion 54 in which various types of input data input by the user and the target travel route P generated by the travel route generating portion 53 are stored.

When the travel route generating portion 53 generates the target travel route P, the car body data such as the type and model of the working vehicle or the work device 12 is input by a user, including the driver and the manager, in accordance with the input guidance for target travel route setting that is displayed on the display unit 51 of the portable communication terminal 3. Further, the input car body data is stored in the terminal storage portion 54. A travel region R (see FIG. 3) in which the target travel route P is to be generated is defined as a work area in the field S, and the terminal electronic control unit 52 of the portable communication terminal 3 obtains field data including the shape and position of the field, and stores the obtained field data in the terminal storage portion 54.

To obtain the field data, the user or other person drives the tractor 1 to actually cause the tractor 1 to run, the terminal electronic control unit 52 can obtain position information for specifying the shape and position of the field from the current position and the like of the tractor 1 obtained by the positioning unit 21. The terminal electronic control unit 52 specifies the shape and position of the field from the obtained position information, and obtains the field data including the travel region R specified by the shape and position of the specified field. FIG. 3 illustrates an example of a rectangular travel region R that has been identified.

When the field data including the shape and position of the specified field is stored in the terminal storage portion 54, the travel route generating portion 53 uses the field data and the car body data stored in the terminal storage portion 54 to generate the target travel route P.

As illustrated in FIG. 3, the travel route generating portion 53 divides the travel region R into a central region R1 and a peripheral region R2. The central region R1 is established in the central area of the travel region R and serves as a reciprocating work area in which the tractor 1 is automatically driven in the reciprocating direction to perform a predetermined work (e.g., plowing) at first. The peripheral region R2 is established around the central region R1 and is an orbiting work area in which the tractor 1 is automatically driven in the circumferential direction to perform the prescribed work after the central region R1. The travel route generating portion 53 determines, for example, the space or the like, for turning that is required to allow the tractor 1 to turn and drive at the edge of the field, on the basis of the turning radius and the front and rear length and left and right width of the tractor 1 that are included in the body data. The travel route generating portion 53 divides the travel region R into the central region R1 and the peripheral region R2 so as to secure the space, or the like, defined on the periphery of the central region R1.

The travel route generating portion 53 generates the target travel route P using vehicle body data, field data, and the like, as shown in FIG. 3. For example, the target travel route P includes a plurality of work routes P1 established in parallel at regular intervals corresponding to the work width with the same straight-line distance in the central region R1, a plurality of turning routes P2 for non-work that connect the trailing ends and leading ends of the adjacent work routes P1 in the running order, and an orbiting route P3 (indicated by a dotted line in the drawing) formed in the peripheral region R2. The work routes P1 are paths for the tractor 1 to perform a predetermined task while traveling in a straight line. The turning routes P2 are U-turn routes for the tractor 1 to change the direction of travel of the tractor 1 by 180 degrees without performing the predetermined task, and connect the trailing ends of the work routes P1 to the leading ends of the adjacent next work routes P1. The orbiting route P3 is a route for the tractor 1 to perform predetermined work while running in circles along the peripheral region R2. In the orbiting route P3, the route sections at the four corners of the travel region R are the route sections for the tractor 1 to change the travel direction of the tractor 1 by 90 degrees while the tractor 1 travels forward and backward, as appropriate. Incidentally, the target travel route P illustrated in FIG. 3 is only an example, and the target travel route to be generated can be changed depending on the vehicle body data, field data, etc.

The target travel route P generated by the travel route generating portion 53 can be displayed on the display unit 51 and is stored in the terminal storage portion 54 as route data associated with vehicle body data, field data, and the like. The route data includes the azimuth angle of the target travel route P and the set engine speed and target travel speed set in accordance with the running mode of the tractor 1 on the target travel route P and other factors.

In this way, when the travel route generating portion 53 generates the target travel route P, the terminal electronic control unit 52 transfers the route data from the portable communication terminal 3 to the tractor 1, and the in-vehicle electronic control unit 18 of the tractor 1 can obtain the route data. The in-vehicle electronic control unit 18 can automatically drive the tractor 1 along the target travel route P while acquiring its current position (the current position of the tractor 1) at the positioning unit 21, based on the acquired route data. The current position of the tractor 1 acquired by the positioning unit 21 is transmitted from the tractor 1 to the portable communication terminal 3 in real-time (e.g., in cycles of several seconds), and the current position of the tractor 1 is determined by the portable communication terminal 3.

With respect to the transfer of the route data, the entire route data can be transferred at once from the terminal electronic control unit 52 to the in-vehicle electronic control unit 18 at a stage before the tractor 1 starts to run automatically. For example, the route data including the target travel route P can be divided into a plurality of route portions for each predetermined distance with a small amount of data. In such a case, only the initial route portion of the route data is transferred from the terminal electronic control unit 52 to the in-vehicle electronic control unit 18 at a stage before the tractor 1 starts automatic running. After the start of the automatic running, each time the tractor 1 reaches a route acquisition point set in accordance with the amount of data or other factors, the route data of only the subsequent route portions corresponding to that point may be transferred from the terminal electronic control unit 52 to the in-vehicle electronic control unit 18.

In the case of starting the automatic running of the tractor 1, for example, when the user or the like has moved the tractor 1 to a start point, and various automatic running initiation conditions are satisfied, the user operates the display unit 51 to instruct the automatic running to be started by way of the portable communication terminal 3. Thereby, the portable communication terminal 3 transmits an instruction to start the automatic running to the tractor 1. Thereby, at the tractor 1, the in-vehicle electronic control unit 18, upon receiving instructions to start automatic running, starts automatic running control to automatically run the tractor 1 along the target travel route P while acquiring its current position (the current position of the tractor 1) at the positioning unit 21.

The automatic running control includes automatic transmission control to automatically control the operation of the transmission 13, automatic braking control to automatically control the operation of the brake operation mechanism 15, automatic steering control to automatically steer the left and right front wheels 5, and automatic control for work to automatically control the operation of the work device 12 of the rotary plow system or the like.

In the automatic gear shift control, the gear shift control portion 181 automatically controls the actuation of the transmission 13 so that a target traveling speed set in accordance with the traveling mode or the like of the tractor 1 on the target travel route P can be obtained as the vehicle speed of the tractor 1, on the basis of the route data on the target travel route P including the target traveling speed, an output of the positioning unit 21, and an output of the vehicle speed sensor 19.

In automatic braking control, the braking control portion 182 automatically controls the operation of the brake operation mechanism 15 so that the left and right side brakes properly brake the left and right rear wheels 6 in the braking area included in the route data of the target travel route P, on basis of the target travel route P and the output of the positioning unit 21.

In the automatic steering control, in order to allow the tractor 1 to automatically run along the target travel route P, the steering angle setting portion 184 obtains and sets the target steering angle of the left and right front wheels 5, on the basis of the route data on the target travel route P and the output of the positioning unit 21, and outputs the set target steering angle to the power steering mechanism 14. The power steering mechanism 14 automatically steers the left and right front wheels 5 so that the target steering angle is obtained as the steering angle of the left and right front wheels 5 on the basis of the target steering angle and the output of the steering angle sensor 20.

In the automatic control for work, the work device control portion 183 starts a predetermined work (e.g., plowing work) by the work device 12 as the tractor 1 reaches a work start point, such as the beginning of the work route P1 (e.g., see FIG. 3), on the basis of the route data of the target travel route P and the output of the positioning unit 21, and in addition, the operation of the clutch operation mechanism 16 and the elevating drive mechanism 17 is automatically controlled so that the predetermined work by the work device 12 is stopped as the tractor 1 reaches the end of the work route P1 (e.g., see FIG. 3) or other work endpoints.

Thus, in the tractor 1, the automatic running unit 2 includes the transmission 13, the power steering mechanism 14, the brake operation mechanism 15, the clutch operation mechanism 16, the elevating drive mechanism 17, the in-vehicle electronic control unit 18, the vehicle speed sensor 19, the steering angle sensor 20, the positioning unit 21, and the communication module 25.

In this embodiment, not only can the tractor 1 be run automatically without a user or other person in-vehicle the cabin 10, but the tractor 1 can also be run automatically with a user or other person in-vehicle the cabin 10. Therefore, not only can the tractor 1 be automatically driven along the target travel route P by automatic running control by the in-vehicle electronic control unit 18 without a user or other person in-vehicle the cabin 10, but the tractor 1 can also be automatically run along the target travel route P by automatic running control by the in-vehicle electronic control unit 18 even when a user or other person is in the cabin 10.

When a user or other person is in-vehicle the cabin 10, the running state of the tractor can be switched between an automatic running state in which the tractor 1 is automatically run by the in-vehicle electronic control unit 18 and a manual running state in which the tractor 1 is run on the basis of the operation of the user or other person. Therefore, while the tractor is running automatically on the target travel route P in the automatic running state, the running state of the tractor can be switched from the automatic running state to the manual running state. Therefore, while the tractor is running in the manual running state, the running state of the tractor can be switched from the manual running state to the automatic running state. As regards the switching between the manual running state and the automatic running state, a switching operation portion for switching between the automatic running state and the manual running state can be provided near the driver's seat 39, for example, and also, the switching operation portion can be displayed on the display unit 51 of the portable communication terminal 3. The running state of the tractor can be made to switch from the automatic running state to the manual running state in response to the user operating the steering wheel 38 during the automatic running control by the in-vehicle electronic control unit 18.

As illustrated in FIGs. 1, 2 and 4 to 6, the tractor 1 includes an obstacle detection system 100 that detects the presence of an obstacle around the tractor 1 (running body 7) and avoids a collision with the obstacle if the presence of the obstacle is detected. The obstacle detection system 100 includes two front and rear light detection and ranging (LiDAR) sensors 101 and 102 that measure the distance to an object to be measured in three dimensions using a laser beam to generate a three-dimensional image; a sonar system 106 that measures the distance to the object to be measure using ultrasonic waves; and a collision avoidance control unit 107 that performs obstacle determination control, collision avoidance control, and the like on the basis of information from each of the LiDAR sensors 101 and 102 and the sonar system 106. The collision avoidance control unit 107 is configured to perform, in the collision avoidance control, a notification process that activates a notification device 26, such as a notification buzzer and a notification lamp, provided in the tractor 1, a deceleration process that reduces the vehicle speed of the tractor 1, a stopping process that stops the tractor 1, and the like, depending on the distance from the obstacle and the like, as appropriate, when the object to be measured is determined to be an obstacle in the obstacle determination control. Here, the objects to be measured by each of the LiDAR sensors 101 and 102 and the sonar system 106 include persons such as workers and other work vehicles working in the field (work area), existing utility poles and trees in the field, and objects such as existing footpaths and fences around the work area.

Each of the LiDAR sensors 101 and 102 measures the distance to the object to be measured by the TOF (time of flight) method, which measures the distance to the object from the round-trip time of a laser beam (e.g., pulsed near-infrared laser beam) hitting and bouncing off the object to be measured. Each of the LiDAR sensors 101 and 102 measures the distance to the object to be measured in three dimensions by scanning a laser beam in the vertical and horizontal directions at high speed and sequentially measuring the distance to the object at each scanning angle. Each of the LiDAR sensors 101 and 102 repeatedly measures the distance to the object to be measured within the measurement range in real-time. Each of the LiDAR sensors 101 and 102 generates three-dimensional images from the measurement results and outputs them to the in-vehicle electronic control unit 18. The three-dimensional images from each of the LiDAR sensors 101 and 102 can be displayed on a display device, such as the display unit of the tractor 1 or the display unit 51 of the portable communication terminal 3, which allows a user or other person to see the situations on the forward side and rear side of the tractor 1. Incidentally, in a three-dimensional image, for example, colors or the like can be used to indicate the distance in the perspective direction.

As illustrated in FIGs. 1, 4 and 5, among the front and rear LiDAR sensors 101 and 102, the front LiDAR sensor 101 is disposed at the center portion in the left-right direction of the front end a roof 35 of the cabin 10 in a forwardly descending position looking down on the forward side of the tractor 1 from the diagonal upward side. As a result, the front LiDAR sensor 101 is set so that the forward side of the tractor 1 is a measurement range C. The rear LiDAR sensor 102 is disposed at the center portion in the left-right direction of the rear end of the roof 35 of the cabin 10 in a rearwardly descending position looking down on the rear side of the tractor 1 from the diagonal upward side. As a result, the rear LiDAR sensor 102 is set so that the rear side of the tractor 1 is a measurement range D.

Incidentally, with respect to the measurement ranges C and D of the LiDAR sensors 101 and 102, a cutting process may be applied to limit their ranges in the left-right direction to set ranges according to the working width of the work device 12.

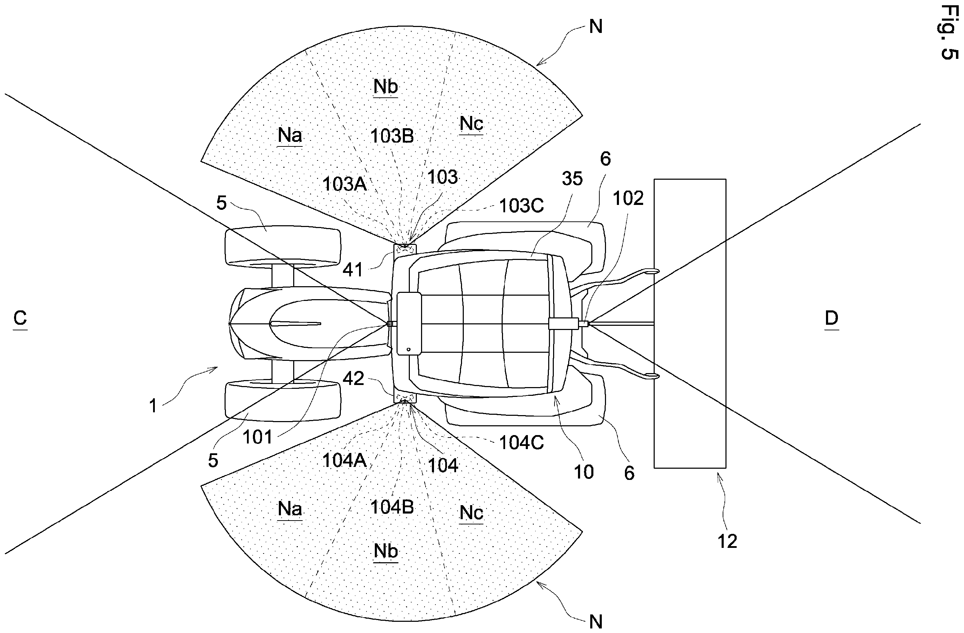

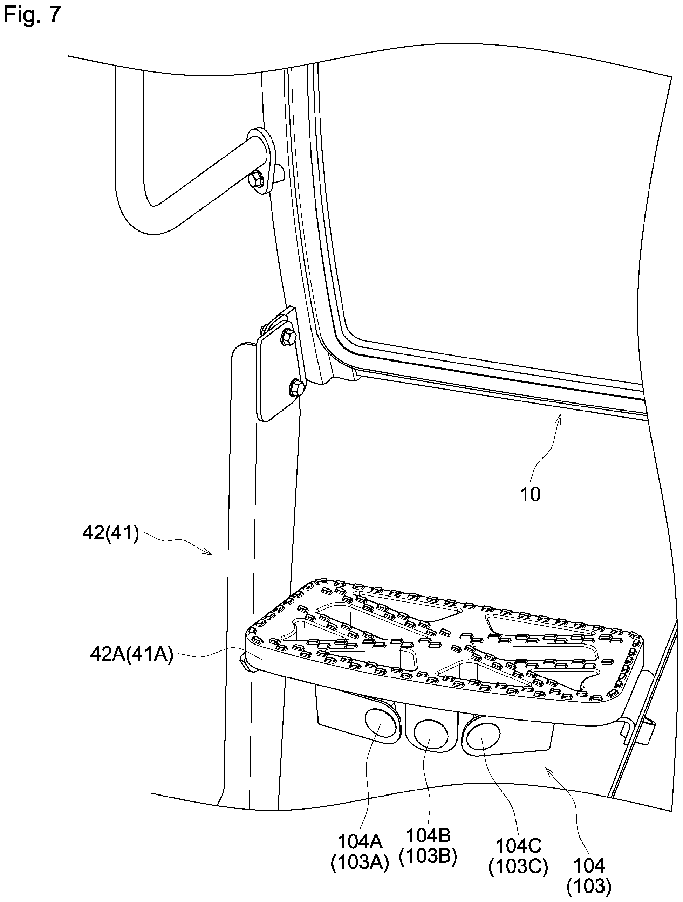

As illustrated in FIGs. 1 and 4 to 7, the sonar system 106 includes a right sensor unit 103 disposed on the right side portion of the tractor 1 (running body 7), a left sensor unit 104 disposed on the left side of the tractor 1 (running body 7), and an electronic control unit 105 for ranging serving as a control unit for measuring the distance to an object that has entered the measurement range N of each of the sensor units 103 and 104. The right sensor unit 103 is fixed at the bottom of an upper step portion 41A of two upper and lower step portions 41A of a right footboard 41 (see FIG. 5) disposed in the lower right side portion of the cabin 10, in a right downward orientation having a small depression angle. This allows the right sensor unit 103 to be positioned relatively high between the right front wheel 5 and the right rear wheel 6 with the right outer side of the tractor 1 set to be the measurement range N. The measurement range N of the right sensor unit 103 is set over a wide range in the front-rear direction, including the measurement ranges Na to Nc of three ultrasonic sensors 103A to 103C aligned in the front-rear direction, as illustrated in FIG. 5. The left sensor unit 104 is fixed at the bottom of an upper step portion 42A of two upper and lower step portions 42A and 42B of a left footboard 42 disposed in the lower left side of the cabin 10, in a left downward orientation having a small depression angle, as illustrated in FIG 7. This allows the left sensor unit 104 to be positioned relatively high between the left front wheel 5 and the left rear wheel 6 with the left outer side of the tractor 1 set to be the measurement range N. The measurement range N of the left sensor unit 104 is set over a wide range in the front and rear direction, including the measurement ranges Na to Nc of three ultrasonic sensors 104A to 104C aligned in the front and rear direction, as illustrated in FIG. 5. Each of the ultrasonic sensors 103A to 103C and 104A to 104C measures the distance to the object to be measured using the time of flight (ToF) method, which measures the distance to the object from the round-trip time of the transmitted ultrasonic waves hitting and bouncing off the object to be measured. The electronic control unit 105 for ranging measures the distance of an object that has entered the measurement ranges Na to Nc of each of the ultrasonic sensors 103A to 103C and 104A to 104C on the basis of the distance measurement operation of each of the ultrasonic sensors 103A to 103C and 104A to 104C.

The left and right sensor units 103 and 104 are configured to allow adjustment of the depression angle and front-to-back mounting angles of each of the ultrasonic sensors 103A to 103C and 104A to 104C. This allows the measurement range N of each of the sensor units 103 and 104 to be set appropriately.

As illustrated in FIG. 2, the collision avoidance control unit 107 is provided in the in-vehicle electronic control unit 18. The in-vehicle electronic control unit 18 is communicatively connected via a CAN (controller area network) to the electronic control unit for the engine included in the common rail system, each of the LiDAR sensors 101 and 102, the sonar system 106, etc.

As illustrated in FIGs. 1, 2, and 4, the tractor 1 includes a front camera 108 that has an imaging range of the forward side of the running body 7, and a rear camera 109 that has an imaging range of the rear side of the running body 7. The front camera 108, like the front LiDAR sensor 101, is disposed at the center portion in the left-right direction of the front end in the roof 35 of the cabin 10 in a forwardly descending position looking down on the forward side of the tractor 1 from the diagonal upward side. The rear camera 109, like the rear LiDAR sensor 102, is disposed at the center portion in the left-right direction of the rear end in the roof 35 of the cabin 10 in a rearwardly descending position looking down on the rear side of the tractor 1 from the diagonal upward side. The images captured by the front camera 108 and the rear camera 109 can be displayed on a display unit, such as the display unit of the tractor 1 or the display unit 51 of the portable communication terminal 3, which allows a user and other person to view the situation around the tractor 1.

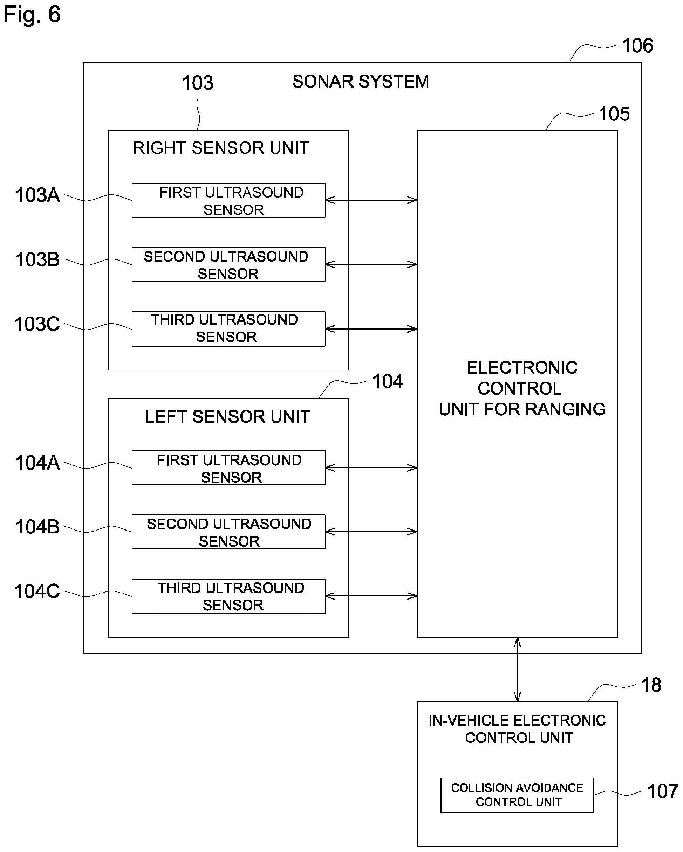

As illustrated in FIGs. 5 and 6, the right-side ultrasonic sensors 103A to 103C and the left-side ultrasonic sensors 104A to 104C are disposed on the left and right side portions of the tractor 1 in positions where their measurement ranges Na to Nc are in a continuous positional relationship in the direction along the left and right side portions of the tractor 1 (front-rear direction). The electronic control unit 105 for ranging performs a position detection process of detecting the position of an object relative to the vehicle position in the direction along both left and right side portions of the tractor 1 (front-rear direction) on the basis of the distance measurement operation of each of the ultrasonic sensors 103A to 103C on the right side or each ultrasonic sensor 104A-104C on the left side on which the measurement ranges Na to Nc are continuous, and displacement detection process of detecting the displacement of an object in the direction along both left and right side portions of the tractor 1 (front-rear direction) on the basis of the order of distance measurement operation of each of the ultrasonic sensors 103A to 103C on the right side or each of the ultrasonic sensors 104A to 104C on the left side, on which the measurement ranges Na to Nc are continuous.

By the above configuration, for example, when an object has entered the measurement range Na of the first ultrasonic sensor 103A, which has a measurement range of the front region of the right outer front side of the vehicle body, the ultrasonic waves emitted from the first ultrasonic sensor 103A hit the object and bounce back to the first ultrasonic sensor 103A. This causes the first ultrasonic sensor 103A to perform a distance measurement operation in which it receives reflected waves in addition to transmitting ultrasonic waves. The electronic control unit 105 for ranging detects the presence of an object in the front region on the outer right side of the vehicle body, which is the measurement range Na, of the first ultrasonic sensor 103A operated for ranging, by the above-described position detection process, and measures the distance from the first ultrasonic sensor 103A to the object on the basis of the time required from the transmission of the ultrasonic waves to reception at the first ultrasonic sensor 103A. As a result, the electronic control unit 105 for ranging can detect, on the basis of the distance measurement operation of the first ultrasonic sensor 103A, an object present at a measurement distance from the first ultrasonic sensor 103A in the front region on the outer right side of the vehicle body.

Similarly, for example, when an object has entered the measurement range Nb of the second ultrasonic sensor 103B, which has a measurement range of the front-rear center region on the outer right side of the vehicle body, the second ultrasonic sensor 103B performs a distance measurement operation, so that the electronic control unit 105 for ranging can detect, on the basis of the distance measurement operation of the second ultrasonic sensor 103B, the presence of an object at a position that is a measurement distance from the second ultrasonic sensor 103B in the front-rear center region on the outer right side of the vehicle body.

Similarly, for example, when an object has entered the measurement range Nc of the third ultrasonic sensor 103C, which has a measurement range of the rear region on the outer right side of the vehicle body, the third ultrasonic sensor 103C performs a distance measurement operation, so that the electronic control unit 105 for ranging can detect, on the basis of the distance measurement operation of the third ultrasonic sensor 103C, the presence of an object at a position that is a measurement distance from the third ultrasonic sensor 103C in the rear region on the outer right side of the vehicle body.

For example, when an object has entered the measurement range Na of the first ultrasonic sensor 103A and then has entered the measurement range Nb of the second ultrasonic sensor 103B, the first ultrasonic sensor 103A performs the distance measurement operation and then the second ultrasonic sensor 103B performs the distance measurement operation, so that the electronic control unit 105 for ranging can detect that the object has been displaced from the front region on the outer right side of the vehicle to the left-right center region by the displacement detection process described above.

Similarly, for example, when an object has entered the measurement range Nb of the second ultrasonic sensor 103B and then has entered the measurement range Nc of the third ultrasonic sensor 103C, the second ultrasonic sensor 103B performs the distance measurement operation and then the third ultrasonic sensor 103C performs the distance measurement operation, so that the electronic control unit 105 for ranging can detect that the object has been displaced from the left-right center region on the outer right side of the vehicle to the rear side by the displacement detection process described above.

Similarly, for example, when an object has entered the measurement range Nc of the third ultrasonic sensor 103C and then has entered the measurement range Nb of the second ultrasonic sensor 103B, the third ultrasonic sensor 103B performs the distance measurement operation and then the second ultrasonic sensor 103B performs the distance measurement operation, so that the electronic control unit 105 for ranging can detect that the object has been displaced from the rear region on the outer right side of the vehicle to the left-right center region by the displacement detection process described above.

Similarly, for example, when an object has entered the measurement range Nb of the second ultrasonic sensor 103B and then has entered the measurement range Na of the first ultrasonic sensor 103A, the second ultrasonic sensor 103B performs the distance measurement operation after the first ultrasonic sensor 103A performs the distance measurement operation, so that the electronic control unit 105 for ranging can detect that the object has been displaced from the front-rear center region on the outer right side of the vehicle to center region to the front region by the displacement detection process described above.

When the object is out of the measurement range N of the right sensor unit 103, each of the ultrasonic sensors 103A to 103C on the right side ceases to perform the distance measurement operation, so that the electronic control unit 105 for ranging can detect that the object is no longer present in the measurement range N of the right sensor unit 103.

And of course, the electronic control unit 105 for ranging measures the distance to the object on the basis of the distance measurement operation of any one of the ultrasonic sensors 103A to 103C and 104A to 104C, so that when an object located in any one of the measurement ranges Na to Nc of corresponding one of the ultrasonic sensors 103A to 103C on the right side portion is displaced in the corresponding one of the measurement ranges Na to Nc in the perspective direction relative to the right side of the vehicle body, the electronic control unit 105 for ranging can detect the displacement of the object in the perspective direction relative to the right side portion of the vehicle body on the basis of the measurement distance that changes accordingly.

When the electronic control unit 105 for ranging detects that an object has been displaced between two regions adjacent to each other in the front-rear direction on the outer right side of the vehicle body by the above-described displacement detection process, the electronic control unit 105 for ranging can detect the displacement of the object in the perspective direction relative to the right side portion of the vehicle, on the basis of the difference in the measurement distance obtained accordingly.

The electronic control unit 105 for ranging then can detect the position and displacement of an object relative to the vehicle body based on the distance measurement operation and the order of the distance measurement operation of each of the ultrasonic sensors 103A to 103C on the right side as described above, on the basis of the distance measurement operation and the order of the distance measurement operation of each of the ultrasonic sensors 104A to 104C on the left side.

In other words, by equipping the tractor 1 with the sonar system 106 including the six ultrasonic sensors 103A to 103C and 104A to 104C and the electronic control unit 105 for ranging, which are less expensive than stereo cameras or LiDAR sensors that are used in place of a stereo camera, it is possible to detect the position and displacement of an object relative to the vehicle body in the vicinity of the left and right side portions of the tractor 1 in the direction along the left and right side portions (front-rear direction) and the perspective direction (left-right direction) relative to the left and right side portions of the tractor 1, without the need to equip the tractor 1 with left and right stereo cameras, left and right LiDAR sensors, or the like, for capturing images of the vicinity of the left and right side portions of the tractor 1.

As a result, it is possible to reduce the cost and the labor required for preliminary work in building the obstacle detection system 100 for a tractor by reducing the number of expensive stereo cameras, LiDAR sensors, and other equipment installed.

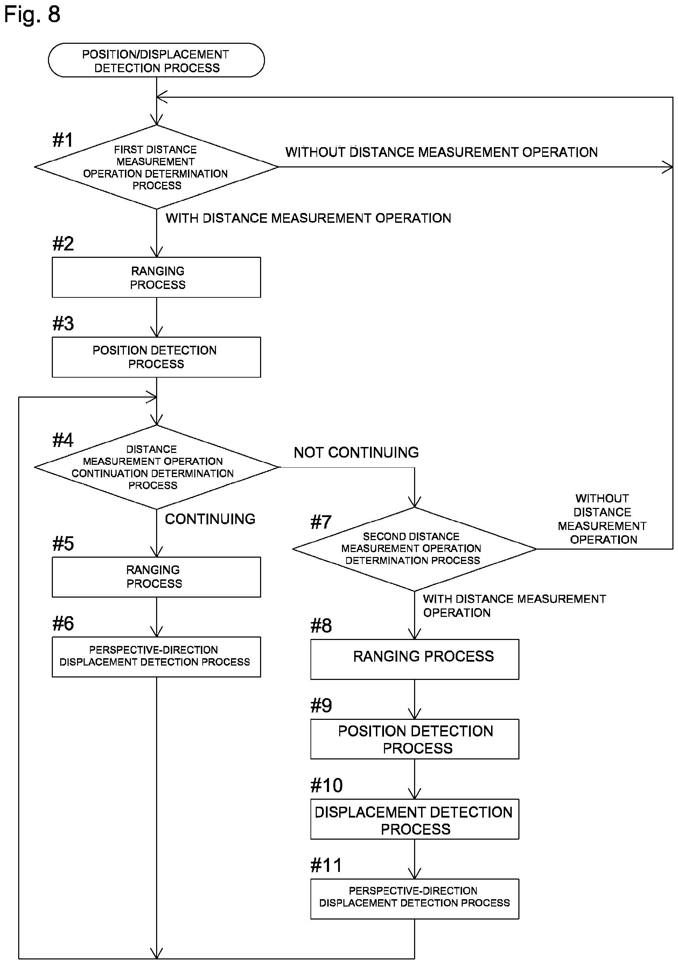

With reference to the flowchart illustrated in FIG. 8, the control operation of the electronic control unit 105 for ranging in the position and displacement detection process described above will now be described.

The electronic control unit 105 for ranging performs the first distance measurement operation determination process to determine whether or not a distance measurement operation is performed at any of the ultrasonic sensors 103A to 103C and 104A to 104C (step #1).

If no distance measurement operation has been performed in step #1, the electronic control unit 105 for ranging waits until a distance measurement operation, and if a distance measurement operation has been performed in step #1, the electronic control unit 105 for ranging performs the ranging process of measuring the distance to the object and the above-described position detection process, to specify the position of the object relative to the vehicle body in the direction along the left and right side portions of the tractor 1 (front-rear direction) (steps #2 and #3).

Next, the electronic control unit 105 for ranging performs a distance measurement operation continuation determination process that determines whether or not the ultrasonic sensors 103A to 103C and 104A to 104C have been continuing the distance measurement operation (step #4).

If the electronic control unit 105 for ranging is continuing the distance measurement operation in step #4, the electronic control unit 105 for ranging performs the above-described ranging process and also performs the perspective-direction displacement detection process to detect the displacement of the object in the perspective direction (left-right direction) relative to the left and right side portions of the tractor 1 on the basis of the difference between the distance to the object obtained in the current ranging process and the distance to the object obtained in the previous ranging process (steps #5 and #6); and then the process returns to step #4.

If the electronic control unit 105 for ranging does not continue the distance measurement operation in step #4, the electronic control unit 105 for ranging performs a second distance measurement operation determination process to determine whether or not the distance measurement operation has been performed at any of the ultrasonic sensors 103A to 103C and 104A to 104C whose measurement ranges Na to Nc are continuous with any of the ultrasonic sensors 103A to 103C and 104A to 104C that has performed the distance measurement operation n in step #1 (step #7).

If the electronic control unit 105 for ranging has performed a distance measurement operation in step #7, the electronic control unit 105 for ranging performs the ranging process described above and the position detection process described above to specify the position of the object relative to the vehicle body in the direction along the left and right side portions of the tractor 1 (front-rear direction) (steps #8 and #9), and performs the displacement detection process and perspective-direction displacement detection process described above on the basis of the difference between the position of the object relative to the vehicle body specified this time and the position of the object relative to the vehicle body specified last time (steps #10 and #11); and then the process returns to step #4.

If no distance measurement operation has been performed in step #7, the electronic control unit 105 for ranging determines that the object is out of the measurement ranges Na to Nc of the respective ultrasonic sensors 103A to 103C and 104A to 104C; and the process returns to step #1.

As shown in FIGs. 5 and 6, the collision avoidance control unit 107 determines an object as an obstacle in the obstacle determination control based on information from the sonar system 106 when any of the ultrasonic sensors 103A to 103C and 104A to 104C detects an object that has entered the measurement range N of either the sensor unit 103 or 104 on the left or right. The collision avoidance control unit 107 controls the running of the tractor 1 in the collision avoidance control based on the information from the sonar system 106.

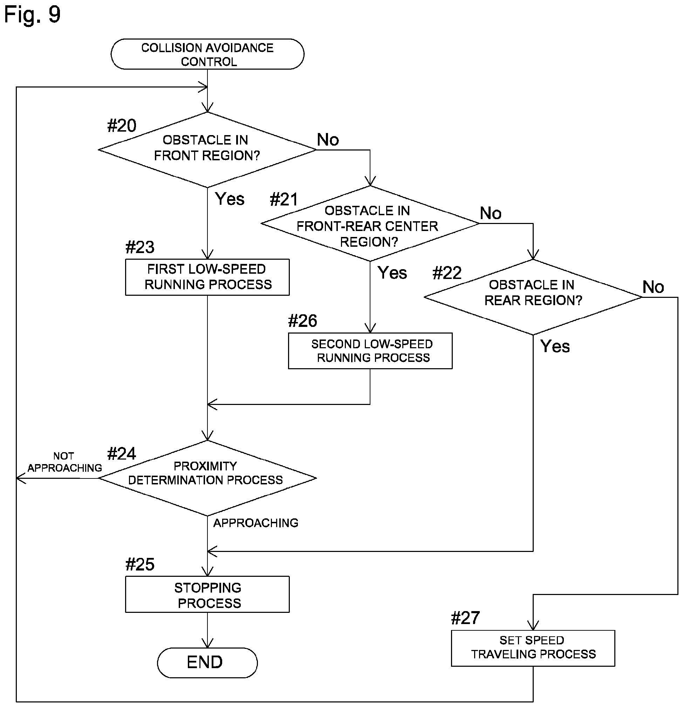

With reference to the flowchart illustrated in FIG. 9, the control operation of the collision avoidance control unit 107 under collision avoidance control based on information from the sonar system 106 will now be described.

First, the collision avoidance control unit 107 determines the position of the obstacle relative to the vehicle body on the basis of the information from the electronic control unit 105 for ranging (steps #20 to #22).

If the position of the obstacle relative to the vehicle body is in the front region (measurement range Na) of either of the left or right side, far from the work device 12 of the tractor 1, the collision avoidance control unit 107 performs a first low-speed running process to causes the tractor 1 to run at a first speed slower than the set speed for work (step #23), and then performs a proximity determination process to determine whether or not the position of the obstacle relative to the vehicle body has been displaced in the approaching direction (the body direction among the left and right directions) among the perspective directions in the front region (measurement range Na) of either the left or right side (step #24). In the proximity determination process, if the position of the obstacle relative to the vehicle body has been determined as to be displaced in the approaching direction, a stopping process to stop the tractor 1 is performed, the collision avoidance control ends (step #25). If there is no displacement in the approaching direction, the process returns to step #20.

If the position of the obstacle relative to the vehicle body is in the front-rear center region on either the left or right side (measurement range Nb), which is closer to the work device 12 of the tractor 1 than the front region on the left or right side (measurement range Na), the collision avoidance control unit 107 performs a second low-speed running process that causes the tractor 1 to run at a second speed slower than the first speed (step #26), and then performs the above-described proximity determination process (step #24). In the proximity determination process, if the position of the obstacle relative to the vehicle body has been displaced in the approaching direction, the above-described stopping process is performed, and the collision avoidance control ends (step #25). If there is no displacement in the approaching direction, the process returns to step #20.

If the position of the obstacle relative to the vehicle body is in the rear region on either the left or right side (measurement range Nc), which is closer to the work device 12 of the tractor 1 than the front-rear center region on the left or right side (measurement range Nb), the collision avoidance control unit 107 performs the stopping process to stop the tractor 1 so as to avoid collision of the work device 12 and the obstacle, and ends the collision avoidance control (step #25). If the position of the obstacle relative to the vehicle body is neither the front region (measurement range Na), the front-rear center region (measurement range Nb), or the rear area (measurement range Nc), the tractor 1 is set at the working speed. Carry out the set speed traveling process (step #27) and then return to step #20.

Such control operation by the collision avoidance control unit 107 enables appropriate control of the running of the tractor 1 on the basis of the position of the obstacle relative to the vehicle body. As a result, it is possible to avoid the possibility of the tractor 1 colliding with an obstacle, as well as to avoid a decrease in work efficiency due to the tractor 1 continue running at low speed with no possibility of colliding with an obstacle.

Incidentally, if the position of the obstacle relative to the vehicle body is any one of the front region (measurement range Na), the front-rear center region (measurement range Nb), and the rear region (measurement range Nc), it is suitable to add a notification process for operating the notification device 26 in the control operation of the collision avoidance control unit 107 in the collision avoidance control. It is even more suitable to cause the notification device 26 to operate differently (for example, by making the notification sound louder) as the position of the obstacle relative to the vehicle body approaches the tractor 1.

If the position of the object relative to the vehicle body is displaced in the approaching direction, the collision avoidance control unit 107 may perform, in place of the stopping process, a steering process for collision avoidance to steer the left and right front wheels 5 in a direction away from the obstacle for collision avoidance in the above-described proximity determination process.

The collision avoidance control unit 107 can perform a map data update process to specify the position of the object (obstacle) in the work area or the like and write this in map data on the basis of the map data stored in the in-vehicle storage portion 185, the object position information obtained by the sonar system 106, and the position information of the ultrasonic sensors 103A to 103C and 104A to 104C that detected the object included in the vehicle body data (the attachment positions of the ultrasonic sensors 103A to 103C and 104A to 104C relative to the tractor 1), and the position information of the tractor 1 included in the positioning information from the positioning unit 21.

Thereby, when the tractor 1 is run along the perimeter of the work area, such as in a field or the like, the positions of fences and footpaths existing around the work area (field), or entrances and exits to the work area, can be specified and added to the map data.

Also, in the case where the tractor 1 is stored in a barn, it is possible to specify the position of the doorway to the barn or the position of the pillars, agricultural machinery, and other objects inside the barn and add them to the map data.

### [Other Embodiments]

Another embodiment of the present invention will now be described.

The configurations of the respective embodiments described below are not necessarily applied independently, but may be applied under combination with the configurations of the other embodiments.
(1) Another typical embodiment regarding the configuration of the work vehicle 1 is as follows.
   For example, the working vehicle 1 may be configured to be of a semi-crawler specification equipped with left and right crawlers instead of the left and right rear wheels 6.
   For example, the work vehicle 1 may be configured in a full crawler specification with left and right crawlers instead of left and right front wheels 5 and left and right rear wheels 6.
   For example, the work vehicle 1 may be configured in an electric specification with an electric motor in place of the engine 9.
   For example, the work vehicle 1 may be configured in a hybrid specification with the engine 9 and an electric motor.
   For example, the work vehicle 1 may be configured with a rear-wheel steering specification in which the left and right rear wheels 6 function as steering wheels.
   For example, the work vehicle 1 may be configured to run a plurality of work vehicles 1 together using an automatic running system to perform work.
   For example, the work vehicle 1 may be configured with work device 12 connected only to either the front or rear of the work vehicle 1.
   For example, the work vehicle 1 may be configured with a protective frame extending above the boarding space from the running body 7, in place of the cabin 10.
(2) The number and arrangement of the sensor units 103 and 104 can be changed in various ways.
   For example, the left and right sensor units 103 and 104 may be provided at the lower ends of both the left and right side portions of the cabin 10.
   For example, the sensor units 103 and 104 may be provided on both the front and rear side portions in the work vehicle 1, such as the front end of the hood 8 or the back of the cabin 10, or on one of the front and rear side portions in the work vehicle 1.
(3) The number and arrangement of the sensor units 103A to 103C and 104A and 104C of the sensor units 103 and 104 can be changed in various ways.

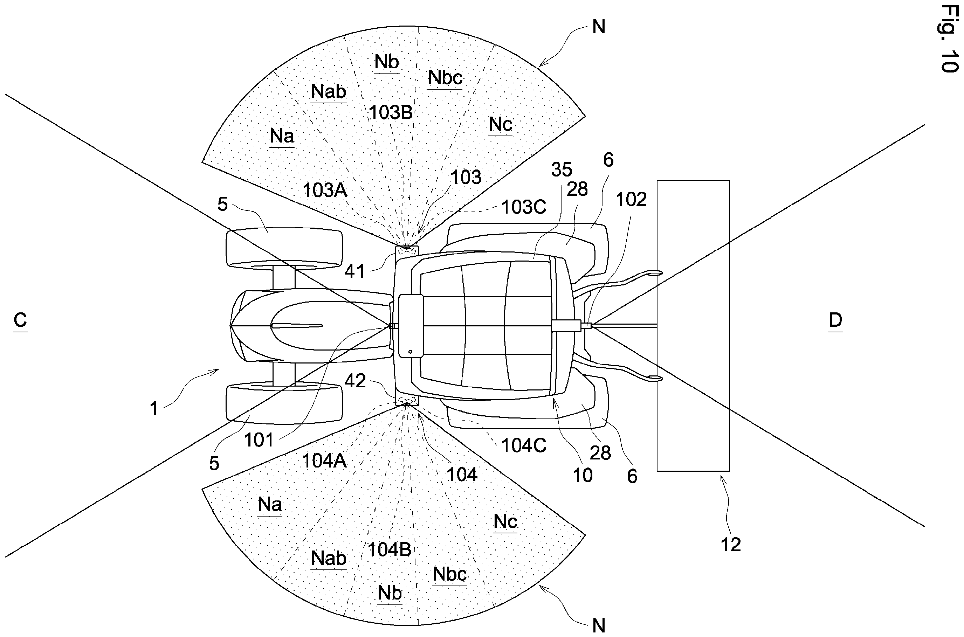

For example, as illustrated in FIG. 10, in the left and right sensor units 103 and 104, the corresponding three ultrasonic sensors 103A to 103C and 104A to 104C may be arranged to have measurement ranges Nab and Nbc in which the measurement ranges Na to Nc overlap each other in the front-rear direction. In such a case, the control unit for ranging (the electronic control unit for ranging) 105 can perform the position detection process, and the displacement detection process described above on the basis of the five measurement ranges Na, Nab, Nb, Nbc and Nc.

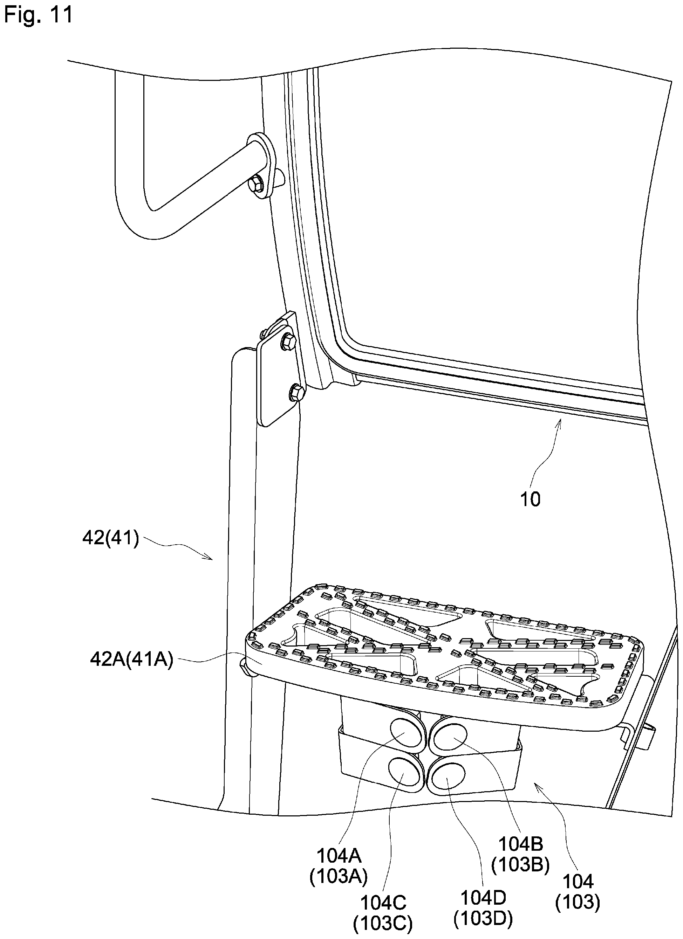

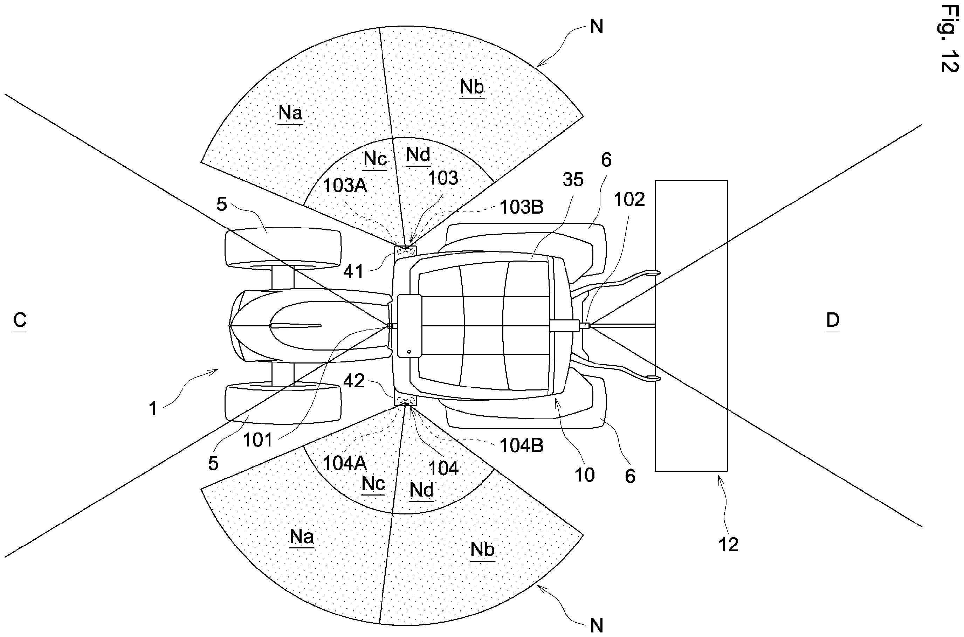

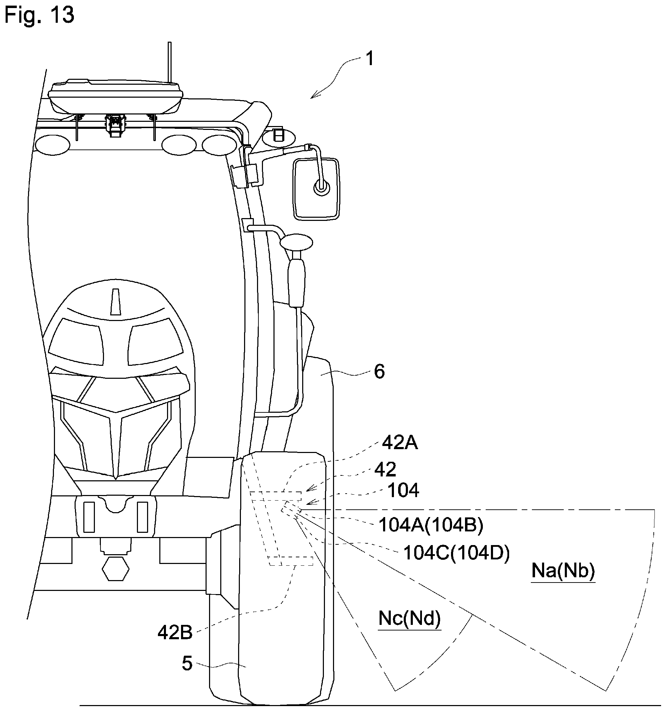

For example, as illustrated in FIG. 11 to 13, in the left and right sensor units 103 and 104, the corresponding four ultrasonic sensors 103A to 103D and 104A to 104D may be aligned vertically and horizontally such that the measurement ranges Na to Nd are disposed to have a continuous positional relation in both the direction along the left and right side portions (front-back direction) and the perspective direction (left-right direction) relative to the left and right side portions. In such a case, the control unit for ranging (the electronic control unit for ranging) 105 can perform the position detection process and the displacement detection process described above on the basis of the four measurement ranges Na, Nb, Nc, and Nd.

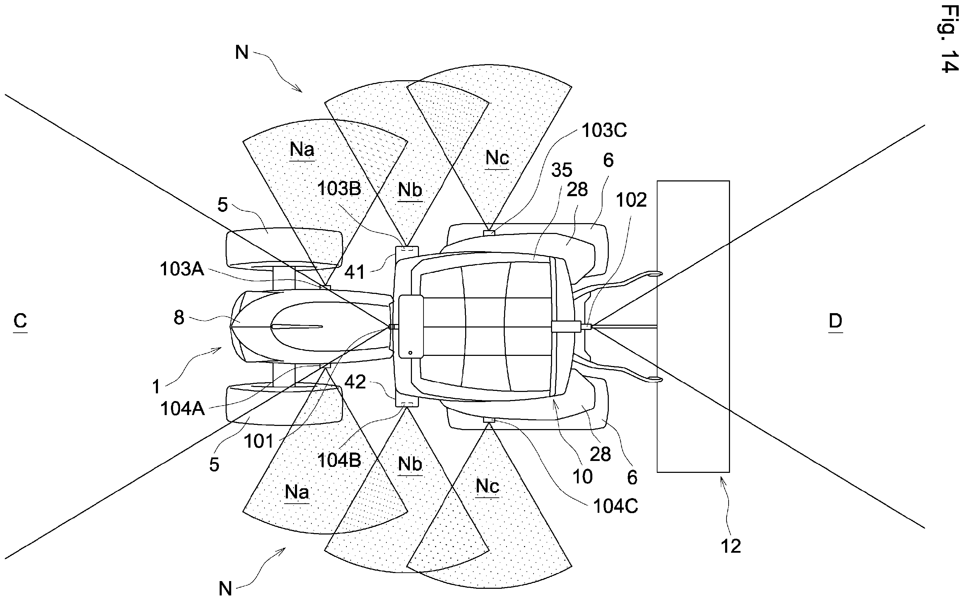

For example, as illustrated in FIG. 14, in the left and right sensor units 103 and 104, the corresponding three ultrasonic sensors 103A to 103C and 104A to 104C may be dispersed to both the left and right side portions of the hood 8, the left and right footboards 41 and 42, and the left and right rear fenders 28 such that the measurement ranges Na to Nc are continuous at equal intervals in a direction along both the left and right side portions (front-back direction).

### INDUSTRIAL APPLICABILITY

The obstacle detection system for a work vehicle according to the present invention can be applied to passenger work vehicles, such as tractors, riding mowers, riding rice transplanters, combines, carriers, snowplows, wheel loaders, and unmanned work vehicles, such as unmanned mowers.

### DESCRIPTION OF REFERENCE NUMERALS

1 work vehicle
103 sensor unit (right sensor unit)
103A first ultrasonic sensor
103B second ultrasonic sensor
103C third ultrasonic sensor
104 sensor unit (left sensor unit)
104A first ultrasonic sensor
104B second ultrasonic sensor
104C third ultrasonic sensor
105 control unit for ranging (electronic control unit for ranging)
107 collision avoidance control unit
Na measurement range
Nb measurement range
Nc measurement range

## Claims

1. An obstacle detection system for a work vehicle, comprising:
a sensor unit including three or more ultrasonic sensors, the sensor unit being disposed on a side portion being one of front, rear, left and right in the work vehicle; and
a control unit for ranging that measures a distance to an object that has entered measurement ranges of the ultrasonic sensors based on distance measurement operations of the ultrasonic sensors, wherein
each of the ultrasonic sensors is disposed on the side portion in a positional relation in which the measurement ranges of at least two of the ultrasonic sensors are continuous in a direction along the side portion, and
the control unit performs a position detection process and a displacement detection process, the position detection process detects a position of the object relative to a vehicle body in the direction along the side portion based on the distance measurement operations of the ultrasonic sensors whose measurement ranges are continuous, the displacement detection process detects the movement of the object in the direction along the side portion based on a sequence of the distance measurement operations of the ultrasonic sensors whose measurement ranges are continuous.

2. The obstacle detection system for a work vehicle according to claim 1,
wherein
the sensor unit includes four or more of the ultrasonic sensors,
the ultrasonic sensors are vertically and horizontally aligned on the side portion in a positional relationship in which the measurement ranges are continuous in both the direction along the side portion and the perspective direction, and
the control unit detects, in the position detection process, the position of the object relative to the vehicle body in a measurement range of the sensor unit based on the distance measurement operations of the ultrasonic sensors whose measurement ranges are continuous, and, in the displacement detection process, detects the movement of the object in the measurement range of the sensor unit based on the sequence of the distance measurement operations of the ultrasonic sensors whose measurement ranges are continuous.

3. The obstacle detection system for a work vehicle according to claim 1 or 2, further comprising a collision avoidance control unit that performs collision avoidance control for avoiding a collision between the work vehicle and the object based on information from the control unit, wherein
the collision avoidance control unit controls running of the work vehicle in the collision avoidance control.
